(19) Europäisches Patentamt
European Patent Office
Office européen des brevets

(11) EP 1 349 368 A1

(12) **EUROPÄISCHE PATENTANMELDUNG**

(43) Veröffentlichungstag:
01.10.2003 Patentblatt 2003/40

(51) Int Cl.7: **H04N 1/32**

(21) Anmeldenummer: 03005696.4

(22) Anmeldetag: 13.03.2003

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO**

(30) Priorität: 18.03.2002 DE 10211982
18.03.2002 DE 10211981

(71) Anmelder: **Mediasec Technologies GmbH**
**45127 Essen (DE)**

(72) Erfinder:
• **Koch, Eckhard, Dr.**
**45147 Essen (DE)**
• **Kubbilun, Wolfgang**
**45127 Essen (DE)**
• **Liu, Ruizhen**
**Shang-Hai, P.R. China 200011 (DE)**

(74) Vertreter: **Gesthuysen, von Rohr & Eggert**
**Patentanwälte**
**Postfach 10 13 54**
**45013 Essen (DE)**

(54) **Verfahren zur Markierung eines Datensatzes**

(57) Die Erfindung betrifft ein Verfahren zur Markierung eines vorzugsweise binär codierten Datensatzes, wobei aus dem Datensatz wenigstens ein Block (1) mit wenigstens einem Bildpunkt, vorzugsweise mit einer Mehrzahl von Bildpunkten zur Einbettung wenigstens einer zusätzlichen Information in den Datensatz ausgewählt wird und wobei der Farbwert wenigstens eines Bildpunktes des Blocks (1) modifiziert wird. Um bei dem vorgenannten Verfahren das Erscheinungsbild des Datensatzes durch die eingebettete Information nur geringfügig zu verändern und eine hohe Sicherheit gegen eine nicht-autorisierte Identifikation der eingebetteten Information zu ermöglichen, wobei gleichzeitig die eingebettete Information eine hohe Robustheit aufweist, ist verfahrengemäß vorgesehen, daß einem Block (1), der lediglich Bildpunkte eines ersten Farbwertes aufweist, ein erster 1-Bit-Schaltzustand zugewiesen wird und daß einem Block (1), der lediglich Bildpunkte eines anderen Farbwertes aufweist, ein zweiter 1-Bit-Schaltzustand zugewiesen wird und daß, gegebenenfalls, ein zur Einbettung vorgesehener Block (1), der Bildpunkte mit wenigstens zwei unterschiedlichen Farbwerten aufweist, so modifiziert wird, daß der Block (1) nach der Modifikation lediglich Bildpunkte eines Farbwertes aufweist.

Fig. 1

EP 1 349 368 A1

**Beschreibung**

Die Erfindung betrifft Verfahren gemäß den Oberbegriffen der Patentansprüche 1, 8, 9, 10, 12, 13, 19, 22, 25 und 27. Darüber hinaus betrifft die Erfindung einen Barcode gemäß dem Oberbegriff des Patentanspruchs 18 sowie einen Fingerabdruck und eine Unterschrift, jeweils versehen mit einem Wasserzeichen.

Aus dem Stand der Technik sind Verfahren zur Markierung von Datensätzen bekannt, bei denen zusätzliche Informationen in Form eines digitalen Wasserzeichens in den Datensatz eingebracht werden. Das digitale Wasserzeichen übernimmt beispielsweise die Funktion eines amtlichen Siegels oder eines Stempels und dient damit dem Nachweis der Echtheit eines Dokumentes.

Aus der EP 0879535 B1 ist ein Verfahren zur Markierung binärer Bilder durch Einbettung eines digitalen Wasserzeichens bekannt, das auf dem Verhältnis von "1"- und "0"-Bits in ausgewählten Blöcken basiert. Eine 1-Bit-Information wird dabei durch zwei unterschiedliche 1-Bit-Schaltzustände, beispielsweise "1" und "0", wiedergegeben. Bei dem bekannten Verfahren erfolgt die Zuweisung eines 1-Bit-Schaltzustandes in Abhängigkeit von dem Anteil der Pixel eines Farbwertes an der Gesamtzahl der Pixel in einem Block. Von Nachteil bei dem bekannten Verfahren zur Markierung binärcodierter Datensätze ist jedoch, daß die "Robustheit" des digitalen Wasserzeichens gegenüber Veränderungen am Datensatz stark begrenzt ist. Die Robustheit eines digitalen Wasserzeichens sichert dessen "Überleben" bei der Überführung in andere mediale Ausprägungsformen, z.B. bei der A/D-Wandlung, der Datenkompression, beim Drucken oder Scannen, und ist daher von wesentlicher Bedeutung für die kommerzielle Nutzung eines digitalen Wasserzeichens.

Aufgabe der vorliegenden Erfindung ist es nun, ein Verfahren zur Markierung von Datensätzen zur Verfügung zu stellen, bei dem das Erscheinungsbild des Datensatzes durch die eingebettete Information nur geringfügig verändert wird, das eine hohe Sicherheit gegen eine nicht-autorisierte Identifikation der eingebetteten Information ermöglicht und wobei gleichzeitig die eingebettete Information eine hohe Robustheit aufweist.

Zur Lösung der vorgenannten Aufgabe ist bei einem Verfahren der vorgenannten Art erfindungsgemäß vorgesehen, daß einem Block, der lediglich Bildpunkte eines ersten Farbwertes aufweist, ein erster 1-Bit-Schaltzustand zugewiesen wird und daß einem Block, der lediglich Bildpunkte eines anderen Farbwertes aufweist, ein zweiter 1-Bit-Schaltzustand zugewiesen wird und daß, gegebenenfalls, ein zur Einbettung vorgesehener Block, der Bildpunkte mit wenigstens zwei unterschiedlichen Farbwerten aufweist, so modifiziert wird, daß der Block nach der Modifikation lediglich Bildpunkte eines Farbwertes aufweist. Zur Veränderung eines 1-Bit-Schaltzustandes ist daher erfindungsgemäß vorgesehen, daß alle Bildpunkte eines Blocks modifiziert (= umgefärbt) werden. In Übereinstimmung mit dem Stand der Technik basiert das Verfahren zur Markierung von Graphikdaten auf zwei unterschiedlichen 1-Bit-Schaltzuständen wenigstens eines ausgewählten Blockes. Gegenüber dem bekannten Verfahren besteht nun erfindungsgemäß der wesentliche Unterschied darin, daß die Zuordnung eines 1-Bit-Schaltzustandes zu einem Block nur dann erfolgt, wenn dieser Block lediglich Bildpunkte (=Pixel) desselben Farbwertes aufweist, also einfarbig ist.

Ein erster 1-Bit-Schaltzustand wird einem Block mit Bildpunkten eines ersten Farbwertes, beispielsweise einem schwarzen Block zugewiesen, während ein zweiter 1-Bit-Schaltzustand einem Block mit grauen Bildpunkten zugewiesen wird. Die hohe Robustheit eines nach dem erfindungsgemäßen Verfahren in einen Datensatz eingebetteten digitalen Wasserzeichens wird gerade dadurch sichergestellt, daß die Einbettung eines "1"- oder "0"-Bits in einen Block nicht mehr in Abhängigkeit von dem Verhältnis der Bildpunkte unterschiedlicher Farbwerte in einem Block erfolgt, sondern in Abhängigkeit von dem Farbwert des Blockes als solchem. Unter dem Begriff "Farbwert" ist dabei ein Wert bzw. ein Wertebereich zu verstehen, der die betreffende Farbe bzw. einen unmittelbar zusammenliegenden Farbbereich in Bezug auf Helligkeit und/oder Reflexionsvermögen für Licht kennzeichnet.

Durch die Wahl einer möglichst geringen Blockgröße und deren Anordnung in dem Datensatz kann sichergestellt werden, daß die Markierung trotz der höheren Robustheit in dem Datensatz "verborgen", d. h. unauffindbar für nicht-autorisierte Beobachter bleibt. Ein Block kann sowohl aus einer Mehrzahl von Bildpunkten bestehen, kann aber auch bis auf einen Bildpunkt pro Block reduziert werden. Die verschiedenen Blöcke innerhalb eines Datensatzes können auch von unterschiedlicher Größe sein. Die Kapazität eines Datensatzes zur Einbettung zusätzlicher Informationen nimmt mit der Anzahl unterscheidbarer Farbwerte, der Komplexität der Bildstruktur, der Bildgröße und sinkenden Anforderungen an das "versteckte" Erscheinungsbild der Markierung im Datensatzes zu.

Falls ein Block lediglich Bildpunkte mit demselben Farbwert beinhaltet, ist eine Modifikation des Farbwertes des Blocks nicht unbedingt notwendig, um dem Block einen 1-Bit-Schaltzustand zuzuweisen. Gegebenenfalls können jedoch auch einfarbige Blöcke "umgefärbt" werden, nämlich wenn gerade einem Block mit einem anderen Farbwert ein bestimmter 1-Bit-Schaltzustand zugewiesen werden soll. Weist ein Block dagegen Bildpunkte mit unterschiedlichen Farbwerten auf, so können vor der Zuweisung eines 1-Bit-Schaltzustandes die Farbwerte der Bildpunkte so verändert bzw. beibehalten werden, daß der Block nach der Modifikation lediglich Bildpunkte mit demselben Farbwert aufweist.

Bei einer vor allem für binäre Bilder bevorzugten Ausführung des erfindungsgemäßen Verfahrens ist vorgesehen, daß ein erster Farbwert $n_1$ eines modifizierten Blockes dem Farbwert $n_1$ wenigstens eines Bildpunktes des Datensatzes entspricht und diesem ersten Farbwert $n_1$ ein erster 1-Bit-Schaltzustand zugewiesen wird und daß, vorzugsweise, ein zweiter Farbwert $n_2$ eines modifizieren Blockes keinem der Farbwerte der Bildpunkte des Datensatzes entspricht und diesem zweiten Farbwert ein zweiter 1-Bit-Schaltzustand zugewiesen wird. Handelt es sich beispielsweise um einen Block aus einem binären Bild, der lediglich weiße (Farbwert = 255) und schwarze (Farbwert = 0) Bildpunkte enthält, so wird beispielsweise zur Einbettung eines "1"- bzw. "0"-Bits allen weißen Bildpunkten des Blocks der Farbwert 0 zugewiesen. Der gesamte Block weist dann schwarze Bildpunkte auf und ist Träger eines ersten 1-Bit-Schaltzustandes. Der gesamte Block kann jedoch auch zur Einbettung eines zweiten 1-Bit-Schaltzustandes, nämlich eines "0"- bzw. "1"-Bits, beispielsweise grau (Farbwert = 128) "eingefärbt" werden. Durch die Aufnahme eines in dem binären Bild ursprünglich nicht vorhandenen Farbwertes in das digitale Wasserzeichen steigt die Robustheit des digitalen Wasserzeichens an.

Um die Einbettung zusätzlicher Informationen in den Datensatz möglichst unauffällig zu gestalten, ist vor allem bei Bildern mit weißem Hintergrund erfindungsgemäß vorgesehen, daß vorzugsweise Blöcke mit einem hohen Anteil von Bildpunkten mit geringem Farbwert, vorzugsweise schwarze Bildpunkte, modifiziert werden. Blöcke mit einem hohen Anteil von Bildpunkten mit hohem Farbwert, vorzugsweise weiße Bildpunkte, werden dagegen nicht modifiziert. Diesem Vorgehen liegt der Grundgedanke zugrunde, daß eine Veränderung stark reflektierender Bildpunkte bzw. von Bildpunkten großer Helligkeit für das menschliche Auge leicht erkennbar ist.

Um das Erscheinungsbild des Datensatzes durch die Markierung möglichst gering zu beeinflussen, ist im übrigen erfindungsgemäß vorgesehen, daß als Träger einer 1-Bit-Information Blöcke mit Bildpunkten ausgewählt werden, deren Farbwerte eine ähnliche Helligkeit und/oder ein ähnliches Reflexionsvermögen für sichtbares Licht aufweisen. So kann beispielsweise ein Block, der Träger eines ersten 1-Bit-Schaltzustandes ist, lediglich Bildpunkte des Farbwertes der Farbe "dunkelgrau" aufweisen, während ein Block, der Träger eines zweiten 1-Bit-Schaltzustandes ist, lediglich Bildpunkte mit einem Farbwert aufweist, der der Farbe "hellgrau" entspricht. Je näher die Farbwerte beieinander liegen, desto stärker sinkt jedoch die Robustheit der eingebetteten Information gegenüber der Überführung des Datensatzes in andere mediale Ausprägungsformen.

Eine bevorzugte Ausführung des erfindungsgemäßen Verfahrens sieht weiter vor, daß der Datensatz zur Einbettung einer Information Blöcke mit einer Mehrzahl von n>2 unterscheidbaren Farbwerten aufweist und daß den Blöcken in Abhängigkeit von dem Farbwert der Bildpunkte in dem jeweiligen Block ein erster oder zweiter 1-Bit-Schaltzustand zugewiesen wird.

Während zwei Farbwerte nur Schaltzustände eines Bits darstellen können, kann bei einer Mehrzahl n>2 unterscheidbarer Farbwerte eine Mehrzahl von 1-Bit-Informationen in den Block eingebracht werden. Grundsätzlich können in einem Datensatz Blöcke mit Bildpunkten beliebiger, unterscheidbarer Farbwerte als Träger eines 1-Bit-Schaltzustandes dienen. Neben der Kombination schwarz-weiß sind Grafikdatensätze, die weiße und grüne bzw. rote und blaue Bildpunkte aufweisen, besonders geeignet. Es ist jedoch auch denkbar, daß eine 1-Bit-Information derart zugewiesen wird, daß einer Mehrzahl unterscheidbarer homogener Farbwerte, beispielsweise gelben, grünen und weißen Blöcken, ein erster 1-Bit-Schaltzustand zugewiesen wird, während einem Block mit einem anderen Farbwert, beispielsweise einem schwarzen Block, ein zweiter Schaltzustand zugewiesen wird.

Vorzugsweise wird nur ein Farbwert des Datensatzes zur Einbettung einer zusätzlichen Information modifiziert. Dadurch wird die Durchführung des Verfahrens erleichtert, wobei die Veränderungen am Datensatz gering sind.

Von besonderem Vorteil kann es sein, daß eine Mehrzahl unterschiedlicher Farbwerte, beispielsweise hellgraue, graue und dunkelgraue Bildpunkte, zu einer Gruppe zusammengefaßt werden und daß Blöcken, die lediglich Bildpunkte eines Farbwertes aus der Gruppe aufweisen, ein 1-Bit-Schaltzustand zugewiesen wird und daß, vorzugsweise, einem Block, der lediglich Bildpunkte eines nicht in der Gruppe enthaltenen Farbwertes, beispielsweise schwarze Bildpunkte enthält, ein zweiter 1-Bit-Schaltzustand zugewiesen wird. Dadurch steigt die Robustheit der eingebetteten Markierung weiter an, da eine Mehrzahl von "Schattierungen" als Träger eines bestimmten 1-Bit-Schaltzustandes identifizierbar ist. Beispielsweise kann es erfindungsgemäß auch vorgesehen werden, graue Bildpunkte mit unterschiedlichen Farbwerten zu einer Gruppe zusammenzufassen und alle Bildpunkte mit einem Farbwert aus der Gruppe in einen anderen Farbwert oder einen Farbwert der Gruppe "umzufärben", und den umgefärbten Blöcken einen 1-Bit-Schaltzustand zuzuweisen. Nach dem zuvor beschriebenen Merkmal könnten beispielsweise allen hellgrauen, grauen und dunkelgrauen Bildpunkten der Farbwert der Farbe schwarz zugewiesen werden.

Zur Einbettung einer umfangreichen Information in einen Datensatz bietet es sich an, ein Muster oder eine Sequenz aus mehreren Blöcken, die jeweils Träger eines 1-Bit-Schaltzustandes sind, zusammenzufassen. Die Informationsmenge eines 2x2 Musters aus 4 Blöcken kann in Abhängigkeit von der Anordnung der Blöcke in dem Muster beispielsweise "1001" oder "0101" sein.

Um die Markierung des Datensatzes möglichst unauffällig für den nicht-autorisierten Beobachter zu gestalten und eine Identifizierung bzw. das Auslesen der in den Datensatz eingebetteten Information nur autorisierten Benutzern zu ermöglichen, ist erfindungsgemäß bei einem Verfahren der eingangs genannten Art vorgesehen, daß die Positionsbestimmung der zur Einbettung einer Information vorgesehenen Blöcke durch einen Schlüssel erfolgt, wobei als Schlüssel eine Zufallsfunktion ausgewählt wird und wobei, vorzugsweise, wenigstens ein zufallsbestimmender Parameter in Art eines Codewortes vorgegeben wird. Das Codewort stellt die Zugangsberechtigung dar, mittels derer ein autorisierter Benutzer sowohl die Auswahl geeigneter Blöcke aus dem Datensatz vornehmen kann, als auch markierte Blöcke zum Auslesen der eingebetteten Information wieder auffindet.

Bei einer weiteren alternativen Ausführungsform des erfindungsgemäßen Verfahrens ist vorgesehen, daß eine Häufigkeitsverteilung aller Farbwerte der Bildpunkte des Datensatzes bestimmt wird und daß auf Grundlage der Häufigkeitsverteilung wenigstens ein Schwellenwert zur Unterscheidung von wenigstens zwei unterschiedlichen Farbwerten des Datensatzes berechnet wird. Ein Problem der Identifikation einer in einen Datensatz eingebetteten Information besteht darin, die zwei unterschiedlichen 1-Bit-Schaltzuständen zugewiesenen Farbwerte nach einer Modifikation des Datensatzes zu unterscheiden. Die Bedeutung dieses Problems steigt mit wachsender Zahl unterschiedlicher "ähnlicher" Farbwerte eines Datensatzes an. Um die Unterscheidung unterschiedlicher Farbwerte auch bei Farben mit nahe beieinanderliegenden Farbwerten zu ermöglichen, ist erfindungsgemäß vorgesehen, daß vor oder während des Auslesevorgangs der einbetteten Information eine Häufigkeitsverteilung bzw. ein Histogramm auf Grundlage aller Farbwerte des Datensatzes ermittelt wird. Dieses Histogramm dient zur Berechnung eines adaptiven Schwellwertes zur Unterscheidung korrespondierender Paare von Farbwerten. Gegebenenfalls können zur weiteren Vereinfachung der Unterscheidung zweier Farbwerte das ermittelte Histogramm bzw. der Schwellenwert mit Referenzverteilungen bzw. Referenzschwellenwerten verglichen und an diese angepaßt werden.

Zur weiteren Steigerung der "Verborgenheit" des digitalen Wasserzeichens in dem Datensatz ist bei dem vorgenannten Verfahren erfindungsgemäß vorgesehen, daß die Einbettung einer Information in einen Block in Abhängigkeit von dem Verhältnis der in einem Block und/oder in dessen Umgebung befindlichen Bildpunkte mit unterschiedlichen Farbwerten erfolgt und daß bei Über- bzw. Unterschreiten eines Grenzwertes keine Information in den Block eingebettet wird, wobei zur Berechnung des Grenzwertes vorzugsweise die Summe der Farbwerte aller Bildpunkte eines Blockes ermittelt wird. Zunächst einmal liegt dem vorgenannten Verfahren die Erkenntnis zugrunde, daß sich zusätzliche Informationen besonders versteckt in den Datensatz einbetten lassen, wenn der Grad der Farbänderung eines Blockes an sich und/oder im Verhältnis zur Umgebung des Blockes möglichst gering ist.

Dabei kommt es auf das Verhältnis der Bildpunkte mit unterschiedlichen Farbwerten in einem Block an, und auch auf die Farbwerte der Bildpunkte, die den Block umgeben. Befindet sich beispielsweise ein Block mit 60% schwarzen und 40% weißen Bildpunkten in einer "weißen Umgebung", so tritt eine Änderung dieses Blockes, bei der die Anzahl schwarzer Bildpunkte erhöht wird, deutlich hervor. Befindet sich der Block dagegen in einer "schwarzen Umgebung", so wirkt sich eine Änderung des Anteils schwarzer Bildpunkte in dem Block deutlich geringer aus, ist sogar von Vorteil. Weist dagegen ein Block beispielsweise lediglich schwarze und weiße Bildpunkte auf, wobei der Anteil der schwarzen Bildpunkte an der Gesamtzahl der Bildpunkte weniger als 50 % beträgt, so würde eine Schwarzfärbung des gesamten Blocks zu einer nicht akzeptablen Qualitätsverschlechterung des Grafikdatensatzes führen. Die Entscheidung darüber, ob der Farbwert der Bildpunkte in einem Block zur Einbettung einer Information verändert wird, ist daher vorzugsweise in Abhängigkeit von der Summe der Farbwerte aller Bildpunkte eines Blockes zu treffen.

Die Berechnung des Grenzwertes kann beispielsweise nach folgender Bedingung erfolgen:

$$Q = 1 - S/(P_R K^2)$$

mit

Q = Grenzwert

S = Summe der Farbwerte alle Bildpunkte eines Blocks

$P_R$ = Referenzfarbwert

$K^2$ = Anzahl aller Bildpunkte eines Blocks

Der nach obiger Bedingung zu berechnende Grenzwert nimmt Werte zwischen 0 und 1 an. Wird als Referenzfarbwert beispielsweise der Farbwert eines weißen Bildelementes (Farbwert $P_R$= 255) gewählt, so ergibt sich für den Grenzwert im Fall eines Bockes mit lediglich weißen Bildpunkten ein Wert von Q = 0. Besteht der Block dagegen ausschließlich aus schwarzen Bildpunkten (Farbwert = 0) so ergibt sich bei gleichem Referenzfarbwert ein Grenzwert von Q = 1. Die Einbettung einer zusätzlichen Information in einen Block erfolgt erfindungsgemäß dann, wenn der Grenzwert einen Schwellenwert unter- bzw. überschreitet. Der Schwellenwert hängt ab von der Umgebung des Blocks gemäß der zuvor erläuterten Zusammenhänge. Ist ein Block ungeeignet, weist der Block in der Regel viele Bildpunkte auf, deren Farbwerte zur Einbettung einer Information modifiziert werden müssen.

Ein wesentliches Problem besteht darin, daß es infolge eines Druck- und/oder Einlesevorgangs des das digitale Wasserzeichen enthaltenen Datensatzes zu einer Verzerrung der Bildpunkte bzw. einer Veränderung der Farbwerte kommen kann, insbesondere dann, wenn unterschiedliche Peripheriegeräte eingesetzt werden. Diese Effekte müssen korrigiert bzw. minimiert werden. Zur Fehlererkennung bzw. -korrektur ist daher bei einem Verfahren der eingangs genannten Art vorgesehen, daß eine Fehleridentifikation bzw. -korrektur des Datensatzes bzw. der Markierung durchgeführt wird. Vorzugsweise kann die Fehleridentifikation bzw. -korrektur auf der Grundlage eines digitalen Inhaltsverzeichnisses der Markierung oder mittels eines ECC-Verfahrens (Error Correction Code) durchgeführt werden.

Der Balkenstrichcode (Barcode) stellt eine der verbreitesten Formen eines maschinell lesbaren Codes dar. Die meisten Barcodes bestehen aus einer Abfolge von dunklen Balken und hellen Leerräumen, die nach einem definierten Bildungsschema numerische oder alphanumerische Informationen verschlüsseln. Barcodes werden in der Regel optisch gelesen. Durch die unterschiedliche Reflektion der dunklen Striche und der hellen Lücken entsteht im optischen Empfänger eine Impulsfolge, die dieser Sequenz an Strichen und Lücken entspricht. Eine elektronische Auswertung interpretiert dann diesen Impulszug als Daten. Bisher übliche Barcodes codieren die Informationen nur in einer Richtung. Dadurch ist die Informationsdichte eines Barcodes nur sehr gering. Neuere Entwicklungen nutzen zur Steigerung der Informationsdichte zwei Dimensionen zur Codierung.

Aufgabe der Erfindung ist es nun, ein Verfahren zur Verfügung zu stellen, mit dem die Informationsdichte eines Barcodes erhöht werden kann, ohne dabei das Auslesen der in der Balkenstrichfolge gespeicherten Information des Barcodes zu erschweren.

Die vorgenannte Aufgabe wird durch die kennzeichnenden Merkmale des Anspruchs 13 gelöst. Der Erfindung liegt die Grundidee zugrunde, die Informationsdichte eines Barcodes durch Einbettung einer "verschlüsselten" bzw. "versteckten" Information in ausgewählten Bereichen des Barcodes zu erhöhen.

Die Einbettung einer zusätzlichen Information in einen Barcode in der Art eines digitalen Wasserzeichens stellt ein völlig neuartiges Anwendungsgebiet für digitale Wasserzeichen dar. Bei einem Barcode geht es nicht in erster Linie darum, die zusätzliche Information "versteckt" oder "geheim" in den Barcode einzubetten. Es geht lediglich darum, die Informationsdichte als solche zu erhöhen. Urheberrechtsschutz, Dokumentenidentifikation und Dokumentenechtheit sind nur am Rande von Bedeutung, da der nicht-autorisierte Beobachter ohnehin weiß, daß ein Barcode verschlüsselte Informationen enthält.

Das erfindungsgemäße Verfahren bietet eine Reihe von entscheidenden Vorteilen. Zum einen kann die Informationsdichte des Barcodes flexibel angepaßt werden, wobei beispielsweise eine Information mit einem Informationsgehalt von bis zu 2000 Bits oder auch mehr zusätzlich in den Barcode eingebettet werden kann. Darüber hinaus ermöglicht das erfindungsgemäße Verfahren die Erhöhung der Informationsdichte des Barcodes, ohne dabei die Decodierung bzw. das Auslesen der bereits in der Balkenstrichfolge des Barcodes verschlüsselt vorliegenden Barcodeinformation zu beeinträchtigen. Die nicht-autorisierte Identifikation des in den Barcode eingebrachten Wasserzeichens wird erheblich erschwert, da erfindungsgemäß lediglich die Balkenflächen, also dunkel und/oder schwach reflektierende Bereiche des Barcodes, zur Einbettung des Wasserzeichens vorgesehen werden. Die hellen, stark reflektierenden Bildpunkte in den Bereichen zwischen den Balkenflächen werden dagegen nicht zur Einbettung vorgesehen, da die Sensitivität des menschlichen Auges bzw. von optischen Leseeinrichtungen gegenüber der Modifikation heller Bildpunkte in Bezug auf Farbtiefe und/oder Reflektionsvermögen besonders hoch ist. Wird beispielsweise ausschließlich in den Flächenbereichen der Balken des Barcodes eine Modifikation einzelner Bildpunkte oder von Blöcken von Bildpunkten vorgenommen, fallen diese Änderungen weder dem Betrachter auf, noch stören sie das Auslesen der Barcode-Information.

Weiterhin zeichnet sich das erfindungsgemäße Verfahren dadurch aus, daß die zusätzlich in den Barcode eingebetteten Informationen eine hohe Robustheit gegenüber Veränderungen am Datensatz aufweisen, die beispielsweise durch Rotation, Änderung der Größenskalierung, Biegung oder niedrigauflösende Druck- und Einlesegeräte verursacht werden. Schließlich können der Barcode bzw. die einzelnen Balken eines Barcodes mit großer Präzision automatisch lokalisiert werden. Dies erleichtert das Auffinden des digitalen Wasserzeichens. Gleiches gilt im übrigen auch dann, wenn autorisierte Personen das digitale Wasserzeichen auslesen wollen und dazu beispielsweise mit einem Handscanner lediglich die Fläche des Barcodes abtasten müssen. Die Auswahl eines geeigneten Verfahrens zur Einbettung eines digitalen Wasserzeichens in einen Barcode kann dabei von den jeweiligen Eigenschaften bzw. Ausprägungsformen des betreffenden Barcodes abhängen. Grundsätzlich können alle aus dem Stand der Technik bekannten Verfahren zum Einbetten eines Wasserzeichens eingesetzt werden.

Um die Einbettung eines digitalen Wasserzeichens in den Barcode bzw. das Auffinden des digitalen Wasserzeichens in einem Barcode zu erleichtern, ist erfindungsgemäß vorgesehen, daß aus dem Barcode wenigstens ein Block mit wenigstens einem Bildpunkt, vorzugsweise einer Mehrzahl von Bildpunkten ausgewählt wird und dem ausgewählten Block zur Einbettung einer zusätzlichen Information wenigstens zwei unterschiedliche 1-Bit-Schaltzustände zugewiesen werden.

Bei einem Barcode handelt es sich in der Regel um ein binäres Bild, nämlich eine Sequenz schwarzer Balken vor weißem Hintergrund. Erfindungsgemäß ist daher vorzugsweise vorgesehen, daß ein erster Farbwert $n_1$ eines modifizierten Blocks dem Farbwert $n_1$ wenigstens eines Bildpunktes eines Balkens des Barcodes entspricht und diesem ersten Farbwert $n_1$ ein erster 1-Bit-Schaltzustand zugewiesen wird. Bei einem üblichen Barcode mit schwarzen Balken kann der Farbwert $n_1$ daher der die Farbe Schwarz kennzeichnende Farbwert sein. Weiter ist vorzugsweise vorgesehen, daß einem modifizierten Block ein zweiter Farbwert $n_2$ zugewiesen wird, wobei der zweite Farbwert $n_2$ keinem der Farbwerte der Bildpunkte des Barcodes entspricht und diesem zweiten Farbwert $n_2$ ein zweiter 1-Bit-Schaltzustand zugewiesen wird. Bei dem zweiten Farbwert $n_2$ kann es sich in dem zuvor erläuterten Beispiel somit um einen Wert handeln, der weder die Farbe Schwarz noch Weiß kennzeichnet, sondern eine andere Farbe, beispielsweise die Farbe Grau.

Infolge der Verarbeitungs- und Vervielfältigungsprozesse kann es dazu kommen, daß ein an sich binärer Barcode nach dem Aufbringen auf eine Ware bzw. nach dem Vervielfältigen eine Mehrzahl unterschiedlicher Schattierungen einer Farbe, d. h. mehrere Farbwerte aus einem zusammenhängenden Farbbereich aufweist. Von besonderem Vorteil ist es dann, eine Mehrzahl unterschiedlicher Farbwerte, beispielsweise hellgraue, schwarze und dunkelgraue Bildpunkte, zu einer Gruppe zusammenzufassen und Blöcken, die lediglich Bildpunkte eines Farbwertes aus der Gruppe aufweisen, einen 1-Bit-Schaltzustand zuzuweisen. Vorzugsweise wird einem Block, der lediglich Bildpunkte eines nicht in der Gruppe enthaltenen Farbwertes enthält, ein zweiter 1-Bit-Schaltzustand zugewiesen. Dadurch steigt die Robustheit der eingebetteten Information weiter an, da eine Mehrzahl von "Schattierungen" als Träger eines bestimmten 1-Bit-Schaltzustandes identifizierbar ist. Beispielweise kann es erfindungsgemäß auch vorgesehen werden, hellgraue, schwarze und dunkelgraue Bildpunkte zu einer Gruppe zusammenzufassen und alle Bildpunkte mit einem Farbwert aus dieser Gruppe in einen anderen Farbwert oder einen Farbwert der Gruppe "umzufärben", um danach diesen umgefärbten Blöcken einen 1-Bit-Schaltzustand zuzuweisen. Nach dem zuvor beschriebenen Merkmal könnten beispielsweise allen hellgrauen, schwarzen und dunkelgrauen Bildpunkten eines Blocks der Farbwert der Farbe Schwarz zugewiesen werden.

Alternativ zu dem beschriebenen erfindungsgemäßen Verfahren zur Einbettung eines digitalen Wasserzeichens in einem Barcode kann es auch vorgesehen sein, daß die Einbettung einer zusätzlichen Information nach dem Verfahren der frequenzbasierten Markierung des Blocks und/oder der verhältnisbasierten Markierung erfolgt. Einzelheiten zu den zuletzt genannten Verfahren können aus der EP 0 879 535 B1 in zusammenfassender Weise, jedoch nicht abschließend entnommen werden. Darüber hinaus ist es selbstverständlich auch möglich, andere Verfahren zur Einbettung einer zusätzlichen Information in Form eines digitalen Wasserzeichens zur Anwendung zu bringen. Auch an dieser Stelle wird beispielhaft erneut auf die EP 0 879 535 B1 verwiesen.

Grundsätzlich ist es möglich, daß die Positionsbestimmung der zur Einbettung einer Information vorgesehenen Blöcke bzw. der das digitale Wasserzeichen bildenden Blöcke in einen Barcode auf der Grundlage der Form und/oder der Farbe und/oder der Helligkeit eines Balkens und/oder der Leerräume zwischen benachbarten Balken und/oder der Codenummer des Barcodes erfolgt. Dabei kommt es darauf an, geeignete Bereiche festzulegen, aus denen ein Block ausgewählt werden kann. Ferner kommt es auch darauf an, das digitale Wasserzeichen nach der Einbettung in den Barcode zu einem späteren Zeitpunkt wieder auffindbar zu machen und so einen Zugriff auf die eingebetteten Informationen zu ermöglichen. Darüber hinaus ist bei der Positionsbestimmung von Vorteil, die Blöcke so zu wählen, daß sowohl das optische Gesamtbild des Barcodes als auch die Decodierung der in der Balkenfolge codierten Informationen des Barcodes nicht beeinträchtigt wird.

Um das Auslesen der mittels eines digitalen Wasserzeichens in den Barcode eingebetteten zusätzlichen Information zu erleichtern und die Decodierung des in der Balkenfolge des Barcodes gespeicherten Informationen nicht zu beeinträchtigen, kann die zusätzliche Information des digitalen Wasserzeichens und die in der Balkenfolge des Barcodes verschlüsselte Information, insbesondere die Codenummer des Barcodes, gleichzeitig ausgelesen werden. Dadurch kann der notwendige Zeitaufwand zur Decodierung bzw. zum Auslesen der gesamten in einen Barcode eingebetteten Informationen deutlich verringert werden. Zudem können zusammen mit der Codenummer des Barcodes die Informationen ausgelesen werden, die zur Identifikation und Decodierung des digitalen Wasserzeichens erforderlich sind.

Eine Aufnahme eines Fingerabdrucks besteht aus diversen Linien und Punkten, die eine eindeutige Zuordnung zu einer Person ermöglichen (Minutien). Der Fingerabdruck dient dazu, eine Person eindeutig zu identifizieren bzw. zu autorisieren. Um eine Fälschung des Fingerabdrucks zu erschweren ist nun erfindungsgemäß vorgesehen, daß der Fingerabdruck mit einem Wasserzeichen versehen wird. Das Wasserzeichen kann weitere Informationen, beispielsweise den Namen oder sonstige Merkmale der durch den Fingerabdruck identifizierten Person, enthalten. Die wesentlichen Merkmale des Fingerabdrucks selbst können auch als Wasserzeichen in den Fingerabdruck integriert werden. Wenngleich grundsätzlich alle aus dem Stand der Technik bekannten Verfahren zur Einbettung eines Wasserzeichens in die graphische Darstellung des Fingerabdrucks vorgesehen werden können, wird vorzugsweise das digitale Wasserzeichen nach einem der eingangs beschriebenen Verfahren eingebettet. Um das Erkennen des digitalen Wasserzeichens durch einen nicht-autorisierten Benutzer zusätzlich zu erschweren, kann erfindungsgemäß weiter vorgesehen sein, daß die zusätzliche Information bzw. das digitale Wasserzeichen ausschließlich im Bereich der Fingerlinien und/oder weiterer Berührungspunkte des Fingers mit einer Unterlage eingebettet wird. Vorzugsweise werden weiße oder helle, stark reflektierende Bereiche der Darstellung des Fingerabdrucks nicht manipuliert, da das menschliche Auge Manipulationen des Farbwertes bzw. der Helligkeit von hellen, stark reflektierenden Bereichen leichter wahrnimmt. Wesentlich ist, daß die Einbettung eines digitalen Wasserzeichens in einen Fingerabdruck zunächst überhaupt nicht erwartet wird, da der Fingerabdruck als solcher bereits ein Sicherheitsmerkmal darstellt.

Gleiches gilt im übrigen für eine Unterschrift. Eine Unterschrift dient zur Identifikation bzw. zur Autorisierung der die Unterschrift abgebenden Person. Erfindungsgemäß ist nun vorgesehen, in eine Unterschrift zumindest eine zusätzliche Information durch ein digitales Wasserzeichen einzubetten. Die Fälschung der Unterschrift wird dadurch wesentlich erschwert. Darüber hinaus ist es auch hier so, daß ein nicht-autorisierter Betrachter der Unterschrift schon gar nicht damit rechnet, daß sich hinter dem Sicherheitsmerkmal "Unterschrift" ein weiteres Sicherheitsmerkmal in Form eines Wasserzeichens verbirgt. Das Wasserzeichen kann zusätzliche Informationen wie beispielsweise den Namen der die Unterschrift leistenden Person oder deren Identifikationsnummer enthalten. Eine eingescannte, digitalisierte Unterschrift kann durch ein Wasserzeichen mit einer digitalen/elektronischen Unterschrift oder eines Hashwertes davon versehen werden. Man erhält sozusagen eine Signatur in einer Signatur.

Um das Erkennen des digitalen Wasserzeichens in der Unterschrift zu erschweren, kann die zusätzliche Information ausschließlich im Bereich des Schriftzuges eingebettet werden.

Schließlich ist darauf hinzuweisen, daß es genauso gut möglich ist, ein digitales Wasserzeichen in ein Hologramm, ein MicroPrint oder eine Guilloche einzubetten.

Vorzugsweise können jeweils wesentliche Kennzeichen eines Sicherheitsmerkmals, beispielsweise eines Fingerabdrucks oder einer Unterschrift über sich selbst als Wasserzeichen in dessen bildlicher Repräsentation integriert werden. Dadurch werden Fälschungsversuche erschwert, da ein Fälscher neben der Fälschung des eigentlichen Sicherheitsmerkmals immer auch das Wasserzeichen, welches auf einem geheimen Schlüssel basieren kann, fälschen bzw. entschlüsseln müßte.

Um die Datensicherheit von auf einem Datenträger gespeicherten Daten zu erhöhen und/oder die Authentifizierung des Datenträgers bzw. der Daten in einfacher und vor allem in sicherer Weise zu ermöglichen, wird gemäß der Erfindung ein Verfahren vorgesehen, wobei mit Hilfe eines Wasserzeichens unterschiedliche Sicherheitsmerkmale des Datenträgers miteinander kombiniert werden. Dadurch wird die Gesamtsicherheit des Datenträgers, beispielsweise eines Dokumentes, erhöht, da zur Manipulation der gespeicherten Daten mehrere Sicherheitsmerkmale gleichzeitig und miteinander abgestimmt gefälscht werden müßten. Als Sicherheitsmerkmale können beispielsweise Hologramme, UV-Muster in Papieren oder Ausweis-Dokumenten, diverse biometrische Informationen, Scrambled Indicia oder auch Informationen, die auf einem Chip in einer Smartcard gespeichert sind, zur Authentifizierung und/oder zur Identifizierung eingesetzt werden. Beispielsweise kann auf die Oberfläche einer Plastikkarte ein Wasserzeichen eingebracht werden, welches verschiedene Sicherheitsmerkmale auf der Karte verbindet, wie beispielsweise Name, Identifikationsnummer der Person, Merkmale eines Fingerabdrucks, der auch auf der Karte abgebildet sein kann oder Merkmale des Ausweisbildes sowie Informationen aus dem Chip der Karte. Durch die Kombination von Sicherheitsmerkmalen über ein digitales Wasserzeichen reicht es zur Fälschung eines Dokuments oder eines Datenträgers nicht aus, die Sicherheitsmerkmale für sich allein zu fälschen, sondern es ist notwendig, zunächst das Wasserzeichen zu entschlüsseln. Das Wasserzeichen kann beispielsweise auch nur eine oder wenige sicherheitsspezifische Informationen von jedem Sicherheitsmerkmal enthalten, wobei ein Fälscher überhaupt keinen Hinweis darauf erhalten kann, welche sicherheitsspezifischen Informationen eines Sicherheitsmerkmals in dem digitalen Wasserzeichen enthalten sind. Vorzugsweise kann das digitale Wasserzeichen auch die zur Entschlüsselung der Sicherheitsmerkmale erforderlichen Daten aufweisen.

Die Verbindung physikalischer Sicherheitsmerkmale mit digitalen Sicherheitsmerkmalen ist aus dem Stand der Technik bekannt. Von Nachteil dabei ist jedoch, daß physikalische Merkmale, beispielsweise eine unterschiedliche Oberflächenstruktur eines Datenträgers, beispielsweise eines Papier- oder Ausweisdokumentes, oder die Verteilung von UV-Pigmenten auf dem Dokument, leicht von einem nicht-autorisierten Betrachter erkannt bzw. entschlüsselt werden können. Um die Sicherheit von auf einem Datenträger gespeicherter Daten zu erhöhen bzw. eine Authentifizierung von Dokumenten mit hoher Sicherheit durchführen zu können, ist bei einem Verfahren gemäß dem Oberbegriff des Patentanspruchs 27 vorgesehen, daß als Schlüssel für die Erzeugung und/oder die Einbettung und/oder das Auslesen des Wasserzeichens eine chemische Information vorgesehen wird. Die chemische Information kann beispielsweise aus der chemischen Zusammensetzung des Papierdokumentes "ausgelesen" werden. Die chemische Information kann auch als solche das Wasserzeichen darstellen. Darüber hinaus ist es grundsätzlich auch möglich, daß die Bereiche des Papiers ermittelt werden, auf die eine chemische Substanz aufgebracht worden ist oder daß die Art einer auf das Dokument aufgebrachten chemischen Substanz bestimmt wird. Im Gegensatz zu physikalischen Sicherheitsmerkmalen können chemische Sicherheitsmerkmale von einem nicht-autorisierten Betrachter nur mit großem Aufwand erkannt werden.

Die Erfindung wird nachstehend ohne Beschränkung des allgemeinen Erfindungsgedankens anhand von Ausführungsbeispielen unter Bezugnahme auf die Zeichnung exemplarisch beschrieben. Es zeigen:

Fig. 1 ein erstes Beispiel der Einbettung einer 1-Bit-Information in einen Block eines Grafikdatensatzes mit einem hohen Anteil von Bildpunkten mit geringem Farbwert,

Fig. 2 ein weiteres Beispiel der Einbettung einer 1-Bit-Information in einen Block eines Grafikdatensatzes mit einem hohen Anteil von Bildpunkten mit hohem Farbwert,

Fig. 3 einen eindimensionalen Barcode mit einer ersten Ausführungsform eines in den Barcode eingebetteten digitalen Wasserzeichens,

Fig. 4 einen eindimensionalen Barcode mit einer weiteren Ausführungsform eines in den Barcode eingebetteten digitalen Wasserzeichens,

Fig. 5 die Anwendung des erfindungsgemäßen Verfahrens zur Einbettung eines digitalen Wasserzeichens in ein Siegel und

Fig. 6 die Anwendung des erfindungsgemäßen Verfahrens zur Einbettung eines digitalen Wasserzeichens in eine Unterschrift.

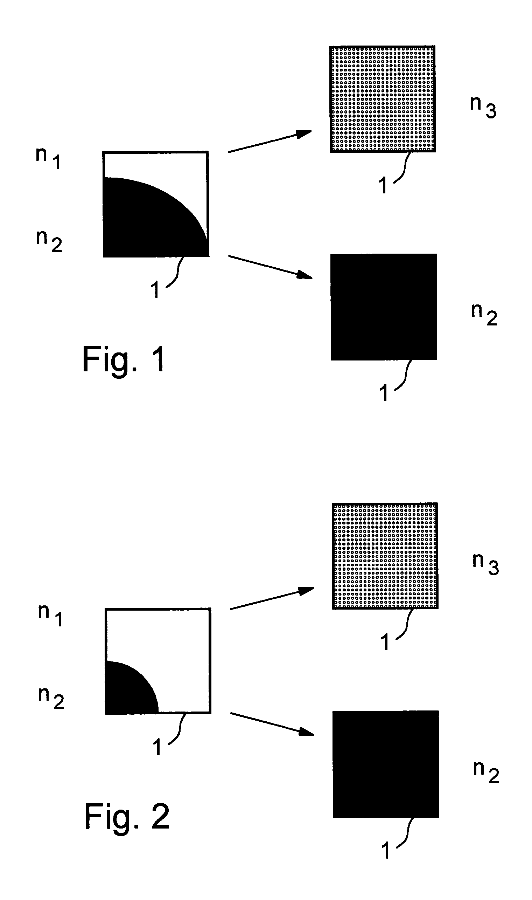

Im folgenden wird anhand der Fig. 1 und 2 das erfindungsgemäße Verfahren zur Einbettung einer zusätzlichen Information in einen binärcodierten Datensatz am Beispiel eines nicht im einzelnen dargestellten binären Bildes, also eine Bildes aus Bildpunkten zweier unterscheidbarer Farbwerte $n_1$, $n_2$, verdeutlicht. Zur Einbettung wenigstens einer zusätzlichen Information wird wenigstens ein Block 1 aus dem Datensatz ausgewählt. Gemäß der Fig. 1 und 2 weist der Block 1 Bildpunkte mit einem ersten Farbwert $n_1$, nämlich weiße Bildpunkte, und Bildpunkte mit einem zweiten Farbwert $n_2$, nämlich schwarze Bildpunkte auf. Die Einbettung einer zusätzlichen Information in den Block 1 erfolgt über eine Modifikation der Farbwerte $n_1$ und/oder $n_2$ der in dem Block 1 enthaltenen Bildpunkte. Grundsätzlich ist es möglich, die Bildpunkte des Blockes 1 mit dem Farbwert $n_1$ oder die Bildpunkte des Blockes 1 mit dem Farbwert $n_2$ zu modifizieren oder auch Bildpunkten beider Farbwerte $n_1$, $n_2$ einen weiteren Farbwert zuzuweisen, d. h. diese Bildpunkte "umzufärben". Nach der Modifikation des Blockes 1 weist dieser gemäß den Fig. 1 und 2 vorliegend entweder nur schwarze Bildpunkte (= Farbwert 0) oder nur graue Bildpunkte mit einem Farbwert $n_3$ (= Farbwert 128) auf. Einem schwarzen Block kann vorliegend ein erster 1-Bit-Schaltzustand ("1" oder "0") zugewiesen werden, während einem grauen Block ein zweiter 1-Bit-Schaltzustand zugewiesen werden kann ("0" bzw. "1"). Ein Block ist somit Träger einer zusätzlichen 1-Bit-Information, wobei der Datensatz nach der Einbettung der Information Bildpunkte mit drei unterschiedlichen Farbwerten aufweist.

Dabei ist zu berücksichtigen, daß im vorliegenden Fall die Modifikation der weißen Bildpunkte aufgrund des weißen Hintergrundes des Blockes 1 für das menschliche Auge leichter erkennbar ist. Ein Block 1, der einen hohen Anteil weißer Bildpunkte aufweist, ist daher weniger für die Modifikation geeignet. Dieses wird bei Vergleich der in den Fig. 1 und 2 durchgeführten Modifikationen des Blockes 1 deutlich, wobei die Modifikation des in der Fig. 2 dargestellten Blockes 1 aufgrund des höheren Anteils weißer Bildpunkte wesentlich stärker hervortritt. Dies gilt vor allem dann, wenn der einem 1-Bit-Schaltzustand zugeordnete Farbwert des modifizierten Blockes deutlich von dem Farbwert der umgebenden Bildpunkte abweicht.

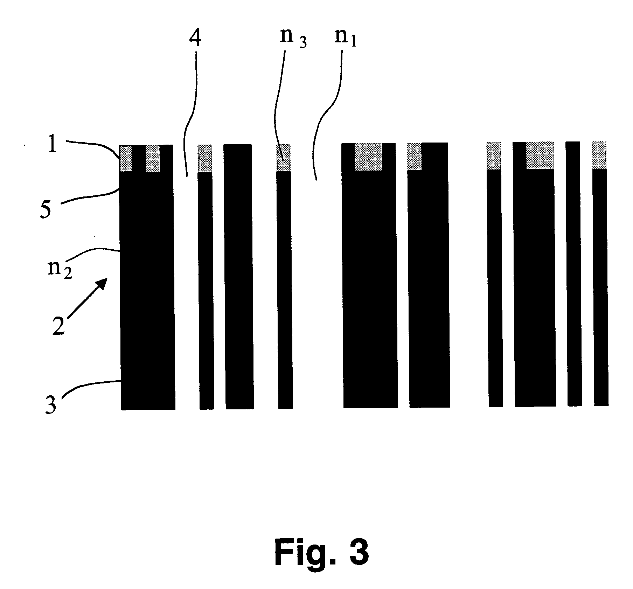

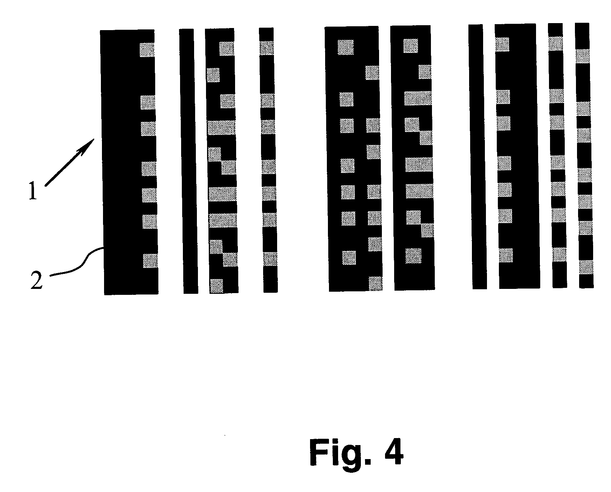

Die in den Fig. 3 bis 6 dargestellten Beispiele zeigen mögliche Anwendungsgebiete zur Einbettung eines digitalen Wasserzeichens, vorzugsweise nach dem erfindungsgemäßen Verfahren. Der Barcode 2 weist gemäß Fig. 3 und Fig. 4 eine Folge von Balken 3 auf, die von Leerräumen 4 unterbrochen sind. In der Balkenfolge des Barcodes 2, nämlich der Abfolge heller Leerräume 4 und dunkler Balken 3 unterschiedlicher Breite ist die Barcode-Information codiert. In einem ersten Prozeßschritt wird der Barcode 2 und/oder das den Barcode 2 aufweisende Bild digitalisiert, beispielsweise eingescannt. Anschließend erfolgt vorzugsweise automatisch die Vorbereitung des Barcodes 2 zum Auffinden eines Wasserzeichens, wobei Veränderungen des Barcodes 2, beispielsweise Verzerrungen, Größenabweichungen, Dehnungen oder Verdrehungen infolge eines Druck- bzw. Einlesevorgangs aufgefunden und behoben werden müssen. Dazu können beispielsweise Filter eingesetzt werden. Ziel des ersten Prozeßschritts ist, den Barcode 2 in der Art "aufzubereiten", daß die Decodierung des Barcodes 2 möglich ist.

Im zweiten Prozeßschritt wird der Barcode 2 in üblicher Art und Weise decodiert, d. h. die in der Balkenfolge der Balken 3 des Barcodes 2 eingebettete Information wird ausgelesen. Darüber hinaus wird die zur Definition unterschiedlicher Barcodetypen verwendete Barcodenummer ermittelt.

Im dritten Prozeßschritt erfolgt die Einbettung einer zusätzlichen Information in den Barcode 2 mittels eines digitalen Wasserzeichens bzw. dessen Extraktion. Durch die Einbettung des digitalen Wasserzeichens wird wenigstens eine zusätzliche Information in den Barcode 2 eingebettet, während bei der Extraktion die zusätzliche Information wieder abgerufen wird. Zu Beginn der Einbettung erfolgt die Lokalisierung der Balken 3 des Barcodes 2 aufgrund deren Farbe und Form. Im Bereich der Balkenflächen des Balkens 3 werden Blöcke 1, 5 ausgewählt und festgelegt. Zur Einbettung einer zusätzlichen Information können Bildpunkte dieser Blöcke 1, 5 modifiziert oder unverändert beibehalten werden, wobei die Modifikation durch Veränderung der Farbe bzw. des Farbwertes der Bildpunkte durchgeführt wird. Zur Einbettung einer 1-Bit-Information in einen Block 1, 5 wird einem ersten Farbwert ein erster 1-Bit-Schaltzustand zugewiesen. Gemäß der Fig. 3 wird beispielsweise dem Block 5, der lediglich schwarze Bildpunkte mit dem Farbwert $n_2$ aufweist, ein erster 1-Bit-Schaltzustand ("1" oder "0") zugewiesen. Einem anderen Block 1, der lediglich graue Bildpunkte mit dem Farbwert $n_3$ aufweist, wird dagegen ein zweiter 1-Bit-Schaltzustand ("0" oder "1") zugewiesen. Die in Fig. 3 dargestellten Blöcke 1, 5 sind nur Vertreter einer Vielzahl von Blöcken, die in einem Barcode 2 zur Einbettung eines digitalen Wasserzeichens vorgesehen sein können.

Der Leerraum 4 zwischen zwei Balken 3 weist lediglich weiße Bildpunkte mit einem Farbwert $n_1$ auf und wird nicht modifiziert, da daß menschliche Auge und auch optische Leseeinrichtungen sensitiv gegenüber einer Modifikation stark reflektierender Bildpunkte sind.

Die Erkennbarkeit des digitalen Wasserzeichens bzw. der Grad der optischen Veränderung des Barcodes 2 nimmt mit der Intensität der Modifikation zu. Unter der "Intensität" ist zum einen die Veränderung der Farbe der Blöcke 1, 5 zu verstehen. Darüber hinaus spielt jedoch auch eine Rolle, wie viele Blöcke 1, 5 in einem Balken 3 modifiziert werden bzw. an welchen Positionen eines Balkens 3 Modifikationen vorgenommen werden. Grundsätzlich gilt, daß die Erkennbarkeit des digitalen Wasserzeichens gering ist, wenn die Veränderung des Farbwertes eines Blockes 1, 5 ebenfalls gering ist. Auf der anderen Seite nimmt die Robustheit des digitalen Wasserzeichens und die Einfachheit des Auslesens mit wachsendem Unterschied zwischen zwei Farbwerten $n_2$ und $n_3$ zu. Offensichtlich wird die Gesamtkapazität eines Wasserzeichens durch den Barcodetyp, das Design des Barcodes 2, seine Größe und die Blockgröße bestimmt.

Selbstverständlich lassen sich mittels des erfindungemäßen Verfahrens zusätzliche Informationen auch in Barcodes 2 einbringen, die mehr als zwei unterscheidbare Farben aufweisen. Darüber hinaus können auch einer Mehrzahl von Farbwerten unterschiedliche 1-Bit-Schaltzustände zugewiesen werden, um die Informationsdichte weiter zu erhöhen.

Die Extraktion des digitalen Wasserzeichens ist die Umkehrung des Einbettungsvorgangs. Um die Robustheit der Einbettung bzw. Extraktion eines digitalen Wasserzeichens noch weiter zu erhöhen, kann neben der bereits beschriebenen, während des ersten Prozeßschritts stattfindenden Vorbehandlung des Barcodes 2 bzw. des den Barcode 2 zeigenden Bildes vorgesehen sein, vor der Extraktion des digitalen Wasserzeichens die Barcodenummer zu identifizieren. Anhand der Barcodenummer kann anschließend der Barcode 2 in seiner originären Form, d. h. ohne Verzerrungen o. dgl. wiederhergestellt werden. Das erleichtert und präzisiert das Auffinden der Blöcke 1, 5, die das digitale Wasserzeichen bilden. Diese Blöcke 1, 5 werden anschließend analysiert, um ihren jeweiligen Farbwert $n_2$, $n_3$ zu ermitteln. Dabei können Fehlerkorrekturverfahren, wie beispielsweise ECC-Verfahren (Error Correction Code) eingesetzt werden, um die während der Detektion des digitalen Wasserzeichens aufgetretenen Fehler zu beheben. Die Anwendung eines solchen Fehlerkorrekturverfahrens reduziert allerdings die Informationsdichte, die mittels eines digitalen Wasserzeichens in einen Barcode 2 eingebettet werden kann. Zusätzlich kann ein digitales Verzeichnis (CRC) des digitalen Wasserzeichens vorgesehen werden, um darüber entscheiden zu können, ob die extrahierten Informationen des digitalen Wasserzeichens fehlerbehaftet sind.

Bei dem in der Fig. 3 dargestellten Barcode 1 sind lediglich im oberen Bereich der Balken 3 zusätzliche Informationen in ausgewählte Blöcke 1, 5 des Barcodes 2 eingebettet worden, wobei die Blöcke 1, 5 lediglich in Fig. 3 exemplarisch hervorgehoben worden sind. Dementsprechend ist die Informationsdichte dieses Barcodes 2 nur geringfügig gegenüber der Informationsdichte eines nicht mit einem digitalen Wasserzeichen versehenen Barcodes 2 erhöht. Durch Einbettung eines digitalen Wasserzeichens in allen Bereichen des Barcodes 2, wie beispielsweise in Fig. 4 dargestellt, kann die Informationsdichte des Barcodes 2 jedoch wesentlich gesteigert werden.

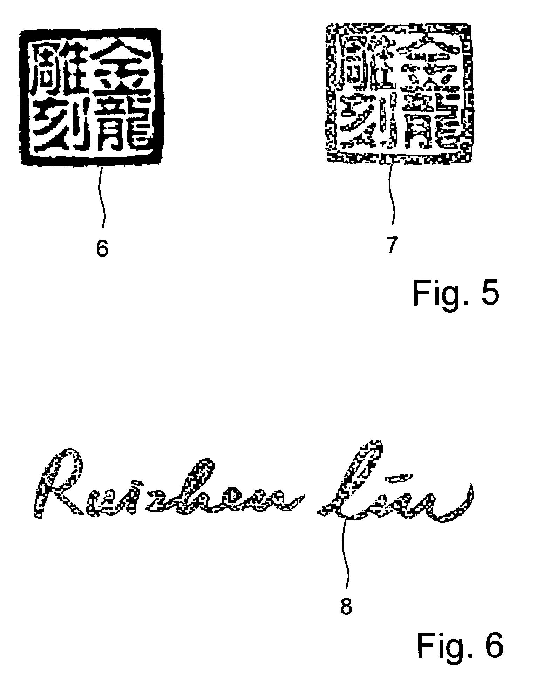

Die Fig. 5 und 6 zeigen die Einbettung eines digitalen Wasserzeichens in ein Siegel 6, 7 bzw. in eine Unterschrift 8, wobei das Siegel 6, 7 vor und nach der Einbettung eines digitalen Wasserzeichens dargestellt ist. Dabei muß es sich jedoch nicht notwendigerweise um Graphikdatensätze aus Bildpunkten mit nur zwei unterscheidbaren Farbwerten handeln, auch Farbbilder können vorzugsweise nach dem erfindungsgemäßen Verfahren mit einem digitalen Wasserzeichen versehen werden.

**Patentansprüche**

1. Verfahren zur Markierung eines vorzugsweise binär codierten Datensatzes, wobei aus dem Datensatz wenigstens ein Block (1) mit wenigstens einem Bildpunkt, vorzugsweise mit einer Mehrzahl von Bildpunkten zur Einbettung wenigstens einer zusätzlichen Information in den Datensatz ausgewählt wird und wobei der Farbwert wenigstens eines Bildpunktes des Blocks (1) modifiziert wird, **dadurch gekennzeichnet, daß** einem Block (1), der lediglich Bildpunkte eines ersten Farbwertes aufweist, ein erster 1-Bit-Schaltzustand zugewiesen wird und daß einem Block (1), der lediglich Bildpunkte eines anderen Farbwertes aufweist, ein zweiter 1-Bit-Schaltzustand zugewiesen wird und daß, gegebenenfalls, ein zur Einbettung vorgesehener Block (1), der Bildpunkte mit wenigstens zwei unterschiedlichen Farbwerten aufweist, so modifiziert wird, daß der Block (1) nach der Modifikation lediglich Bildpunkte eines Farbwertes aufweist.

2.  Verfahren nach Anspruch 1, **dadurch gekennzeichnet, daß** ein erster Farbwert $n_1$ eines modifizierten Blockes (1) dem Farbwert $n_1$ wenigstens eines Bildpunktes des Datensatzes entspricht und diesem ersten Farbwert $n_1$ ein erster 1-Bit-Schaltzustand zugewiesen wird und daß, vorzugsweise, ein zweiter Farbwert $n_2$ eines modifizieren Blockes (1) keinem der Farbwerte der Bildpunkte des Datensatzes entspricht und diesem zweiten Farbwert ein zweiter 1-Bit-Schaltzustand zugewiesen wird.

3.  Verfahren nach Anspruch 1 oder 2, **dadurch gekennzeichnet, daß** lediglich Blöcke (1) mit einem hohen Anteil von Bildpunkten mit geringem Farbwert, vorzugsweise mit schwarzen Bildpunkten, modifiziert werden und/oder daß nur ein Farbwert des Datensatzes modifiziert wird.

4.  Verfahren nach einem der vorhergehenden Ansprüche, **dadurch gekennzeichnet, daß** als Träger einer 1-Bit-Information Blöcke (1) mit Bildpunkten ausgewählt werden, deren Farbwerte eine ähnliche Helligkeit und/oder ein ähnliches Reflexionsvermögen für Licht aufweisen.

5.  Verfahren nach einem der vorhergehenden Ansprüche, **dadurch gekennzeichnet, daß** der Datensatz zur Einbettung einer Information Blöcke (1) mit einer Mehrzahl von n>2 unterscheidbaren Farbwerten aufweist und den Blöcken (1) in Abhängigkeit von dem Farbwert der Bildpunkte in dem jeweiligen Block (1) ein erster oder zweiter 1-Bit-Schaltzustand zugewiesen wird.

6.  Verfahren nach einem der vorhergehenden Ansprüche, **dadurch gekennzeichnet, daß** eine Mehrzahl unterschiedlicher Farbwerte zu einer Gruppe zusammengefaßt wird und daß Blöcken (1), die lediglich Bildpunkte eines Farbwertes aus der Gruppe aufweisen, ein 1-Bit-Schaltzustand zugewiesen wird und daß, vorzugsweise, einem Block (1), der lediglich Bildpunkte eines nicht in der Gruppe enthaltenen Farbwertes aufweist, ein zweiter 1-Bit-Schaltzustand zugewiesen wird.

7.  Verfahren nach einem der vorhergehenden Ansprüche, **dadurch gekennzeichnet, daß** einer Sequenz oder einem Muster aus Blöcken (1) eine Mehrzahl von 1-Bit-Informationen zugewiesen wird.

8.  Verfahren zur Markierung eines vorzugsweise binär codierten Datensatzes, wobei aus dem Datensatz wenigstens ein Block (1) mit wenigstens einem Bildpunkt, vorzugsweise mit einer Mehrzahl von Bildpunkten zur Einbettung wenigstens einer zusätzlichen Information in den Datensatz ausgewählt wird und wobei der Farbwert wenigstens eines Bildpunktes des Blocks (1) modifiziert wird, insbesondere nach einem der vorhergehenden Verfahrensansprüche 1 bis 7, **dadurch gekennzeichnet, daß** die Positionsbestimmung der zur Einbettung einer Information vorgesehenen Blöcke (1) durch einen Schlüssel erfolgt, wobei als Schlüssel eine Zufallsfunktion ausgewählt wird und wobei, vorzugsweise, wenigstens ein zufallsbestimmender Parameter in Art eines Codewortes vorgegeben wird.

9.  Verfahren zur Markierung eines vorzugsweise binär codierten Datensatzes, wobei aus dem Datensatz wenigstens ein Block (1) mit wenigstens einem Bildpunkt, vorzugsweise mit einer Mehrzahl von Bildpunkten zur Einbettung wenigstens einer zusätzlichen Information in den Datensatz ausgewählt wird und wobei der Farbwert wenigstens eines Bildpunktes des Blocks (1) modifiziert wird, insbesondere nach einem der vorhergehenden Verfahrensansprüche 1 bis 8, **dadurch gekennzeichnet, daß** eine Häufigkeitsverteilung aller Farbwerte der Bildpunkte des Datensatzes bestimmt wird und daß auf Grundlage der Häufigkeitsverteilung wenigstens ein Schwellwert zur Unterscheidung von wenigstens zwei unterschiedlichen Farbwerten des Datensatzes berechnet wird.

10. Verfahren zur Markierung eines vorzugsweise binär codierten Datensatzes, wobei aus dem Datensatz wenigstens ein Block (1) mit wenigstens einem Bildpunkt, vorzugsweise mit einer Mehrzahl von Bildpunkten zur Einbettung wenigstens einer zusätzlichen Information in den Datensatz ausgewählt wird und wobei der Farbwert wenigstens eines Bildpunktes des Blocks (1) modifiziert wird, insbesondere nach einem der vorhergehenden Verfahrensansprüche 1 bis 9, **dadurch gekennzeichnet, daß** die Einbettung einer Information in einen Block (1) in Abhängigkeit von dem Verhältnis der in einem Block (1) befindlichen Bildpunkte mit unterschiedlichen Farbwerten erfolgt und daß bei Über- bzw. Unterschreiten eines Grenzwertes keine Information in den Block (1) eingebettet wird, wobei zur Berechnung des Grenzwertes vorzugsweise die Summe der Farbwerte alle Bildpunkte eines Blockes (1) ermittelt wird.

11. Verfahren nach Anspruch 10, **dadurch gekennzeichnet, daß** die Berechnung des Grenzwertes nach folgender Bedingung erfolgt:

$$Q = 1 - S/(P_R K^2)$$

mit

Q = Grenzwert

S = Summe der Farbwerte aller Bildpunkte eines Blocks (1)

$P_R$ = Referenzfarbwert

$K^2$ = Anzahl aller Bildpunkte eines Blocks (1).

12. Verfahren zur Markierung eines vorzugsweise binär codierten Datensatzes, wobei aus dem Datensatz wenigstens ein Block (1) mit wenigstens einem Bildpunkt, vorzugsweise mit einer Mehrzahl von Bildpunkten zur Einbettung wenigstens einer zusätzlichen Information in den Datensatz ausgewählt wird und wobei der Farbwert wenigstens eines Bildpunktes des Blocks (1) modifiziert wird, insbesondere nach einem der vorhergehenden Verfahrensansprüche 1 bis 11, **dadurch gekennzeichnet, daß** eine Fehleridentifikation bzw. -korrektur des Datensatzes bzw. der eingebetteten Information vorzugsweise nach einem ECC-Verfahren (Error Correction Code) durchgeführt wird.

13. Verfahren zur Erhöhung der Informationsdichte eines ein- oder mehrdimensionalen Barcodes (2), wobei mittels wenigstens eines digitalen Wasserzeichens zumindest eine zusätzliche Information in den Barcode (2) eingebettet wird, **dadurch gekennzeichnet, daß** die zusätzliche Information ausschließlich im Bereich der Balkenfläche wenigstens eines Balkens (3) des Barcodes (2) eingebettet wird, insbesondere nach einem der vorhergehenden Ansprüche.

14. Verfahren nach Anspruch 13, **dadurch gekennzeichnet, daß** aus dem Barcode (2) wenigstens ein Block (1, 5) mit wenigstens einem Bildpunkt ausgewählt wird, daß ein erster Farbwert $n_2$ eines zur Einbettung einer Information vorgesehenen Blockes (5) dem Farbwert $n_2$ wenigstens eines Bildpunktes eines Balkens (3) des Barcodes (2) entspricht und einem Block (5) mit dem Farbwert $n_2$ ein erster 1-Bit-Schaltzustand zugewiesen wird und daß, vorzugsweise, ein zweiter Farbwert $n_3$ wenigstens eines weiteren Blockes (1) keinem der Farbwerte $n_1$, $n_2$ der Bildpunkte des Barcodes (2) entspricht und einem Block (1) mit diesem Farbwert $n_3$ ein zweiter 1-Bit-Schaltzustand zugewiesen wird.

15. Verfahren nach einem der vorhergehenden Ansprüche 13 bis 14, **dadurch gekennzeichnet, daß** die Positionsbestimmung der Blöcke (1, 5) in dem Barcode (2) auf der Grundlage der Form und/oder der Farbe und/oder der Helligkeit der Balkenfläche eines Balkens (3) und/oder der Leerräume (4) zwischen benachbarten Balken (3) und/oder der Codenummer des Barcodes (2) erfolgt.

16. Verfahren nach einem der vorhergehenden Ansprüche 13 bis 15, **dadurch gekennzeichnet, daß** die zusätzliche Information des digitalen Wasserzeichens und die in der Balkenfolge des Barcodes (2) verschlüsselte Information, insbesondere die Codenummer des Barcodes (2), gleichzeitig ausgelesen werden.

17. Verfahren nach einem der vorhergehenden Ansprüche 13 bis 16, **dadurch gekennzeichnet, daß** aus einem digitalisierten Bild, das den zur Einbettung des digitalen Wasserzeichens vorgesehenen Barcode (2) aufweist, vorzugsweise automatisch eine Balkenfläche wenigstens eines Balkens (3) des Barcodes (2) zur Einbettung des digitalen Wasserzeichens ausgewählt wird.

18. Barcode (2), wobei zur Erhöhung der Informationsdichte wenigstens ein digitales Wasserzeichen in den Barcode (2) eingebettet ist, **dadurch gekennzeichnet, daß** das digitale Wasserzeichen ausschließlich im Bereich der Balkenfläche wenigstens eines Balkens (3) des Barcodes (2) eingebettet ist, vorzugsweise nach einem der vorhergehenden Verfahrensansprüche.

19. Verfahren zum Einbetten eines digitalen Wasserzeichens in eine graphische, vorzugsweise digitalisierte Darstellung eines Fingerabdruckes, wobei mittels des digitalen Wasserzeichens zumindest eine zusätzliche Information in den Fingerabdruck eingebettet wird, insbesondere nach einem der vorhergehenden Verfahrensansprüche 1 bis 12.

20. Verfahren nach Anspruch 19, **dadurch gekennzeichnet, daß** die zusätzliche Information ausschließlich im Bereich der Fingerlinien und/oder weiterer Berührungspunkte des Fingers eingebettet wird.

21. Fingerabdruck, **dadurch gekennzeichnet, daß** der Fingerabdruck mit einem Wasserzeichen versehen ist, vorzugsweise nach einem Verfahren gemäß den vorhergehenden Ansprüchen 19 bis 20.

22. Verfahren zum Einbetten eines digitalen Wasserzeichens in eine graphische, vorzugsweise digitalisierte Darstellung einer Unterschrift (8), wobei mittels des digitalen Wasserzeichens zumindest eine zusätzliche Information in die Unterschrift (8) eingebettet wird, insbesondere nach einem der vorhergehenden Verfahrensansprüche 1 bis 12.

23. Verfahren nach Anspruch 22, **dadurch gekennzeichnet, daß** die zusätzliche Information ausschließlich im Bereich des Schriftzuges eingebettet wird.

24. Unterschrift (8), **dadurch gekennzeichnet, daß** die Unterschrift mit einem Wasserzeichen versehen ist, vorzugsweise nach einem Verfahren gemäß den vorhergehenden Ansprüchen 22 bis 23.

25. Verfahren zur Erhöhung der Datensicherheit von auf einem Datenträger gespeicherten Daten und/ oder zur Authentifizierung des Datenträgers bzw. der Daten, wobei der Datenträger wenigstens zwei unterschiedliche Sicherheitsmerkmale zur Sicherung und/oder zur Authentifizierung der Daten und/ oder des Datenträgers aufweist, **dadurch gekennzeichnet, daß** als Schnittstelle zwischen den Sicherheitsmerkmalen ein in den Datensatz eingebettetes digitales Wasserzeichen vorgesehen wird, wobei das digitale Wasserzeichen zumindest eine sicherheitsspezifische Information von jedem Sicherheitsmerkmal enthält und wobei, vorzugsweise, das Wasserzeichen nach einem der vorhergehenden Ansprüche eingebettet wird.

26. Verfahren nach Anspruch 25, **dadurch gekennzeichnet, daß** das digitale Wasserzeichen die zur Entschlüsselung der Sicherheitsmerkmale erforderlichen Daten aufweist.

27. Verfahren zur Markierung eines auf einem Datenträger gespeicherten Datensatzes, vorzugsweise zur Authentifizierung von Papierdokumenten, wobei durch ein digitales Wasserzeichen wenigstens eine zusätzliche Information in den Datensatz eingebracht wird, insbesondere nach einem der vorhergehenden Verfahrensansprüche 1 bis 12, **dadurch gekennzeichnet, daß** als Schlüssel für die Erzeugung und/oder die Einbettung und/oder das Auslesen des Wasserzeichens eine chemische Information vorgesehen wird.

28. Verfahren nach Anspruch 27, **dadurch gekennzeichnet, daß** die chemische Zusammensetzung des Papierdokumentes als Schlüssel verwendet wird und/oder daß eine vorzugsweise bereichsweise zur Oberflächenbehandlung des Papierdokumentes aufgebrachte chemische Substanz ermittelt wird und/oder daß die Bereiche des Papierdokumentes ermittelt werden, auf die die chemische Substanz aufgebracht worden ist.

$n_1$

$n_2$

$n_3$

1

$n_2$

1

1

Fig. 1

$n_1$

$n_2$

$n_3$

1

$n_2$

1

1

Fig. 2

**Fig. 3**

**Fig. 4**

6

7

## Fig. 5

8

## Fig. 6

**Europäisches Patentamt**

## EUROPÄISCHER RECHERCHENBERICHT

Nummer der Anmeldung

EP 03 00 5696

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | EP 0 879 535 A (FRAUNHOFER GES FORSCHUNG) 25. November 1998 (1998-11-25) | 8,9,13, 19,21, 22,27,28 | H04N1/32 |
| A | * das ganze Dokument * | 1-7, 10-12, 14-18, 20,23-26 | |

-----

| | | | RECHERCHIERTE SACHGEBIETE (Int.Cl.7) |
|---|---|---|---|
| | | | H04N |

Der vorliegende Recherchenbericht wurde für alle Patentansprüche erstellt

| Recherchenort | Abschlußdatum der Recherche | Prüfer |
|---|---|---|
| DEN HAAG | 10. Juli 2003 | Stoffers, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 03 00 5696

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-07-2003

| Im Recherchenbericht angeführtes Patentdokument | Datum der Veröffentlichung | Mitglied(er) der Patentfamilie | Datum der Veröffentlichung |
|---|---|---|---|
| EP 0879535 A | 25-11-1998 | DE 19521969 C1 | 27-02-1997 |
| | | AT 196221 T | 15-09-2000 |
| | | DE 59605853 D1 | 12-10-2000 |
| | | DK 879535 T3 | 02-01-2001 |
| | | EP 0879535 A1 | 25-11-1998 |
| | | GR 3035000 T3 | 30-03-2001 |
| | | JP 2000515691 T | 21-11-2000 |
| | | US 6359985 B1 | 19-03-2002 |
| | | CA 2224317 A1 | 03-01-1997 |
| | | WO 9700578 A1 | 03-01-1997 |
| | | ES 2152530 T3 | 01-02-2001 |
| | | PT 879535 T | 30-03-2001 |

EPO FORM P0461

Für nähere Einzelheiten zu diesem Anhang : siehe Amtsblatt des Europäischen Patentamts, Nr.12/82